# EUROPEAN PATENT APPLICATION

(11) **EP 4 023 814 A1**
(43) Date of publication of application: **06.07.2022**
(21) Application number: 20217829.9
(22) Date of filing: 30.12.2020
(51) Int. Cl.: D21H 11/18, D21H 15/10, D21H 21/18, D21H 27/10, H01B 1/12, H01G 11/48, H01M 4/60

(54) **METHOD OF PREPARING A POROUS STRUCTURE WITH CELLULOSE FIBRES COATED WITH REDOX-ACTIVE POLYMER**

(71) Applicant: BillerudKorsnäs AB, 169 27 Solna (SE)
(72) Inventor: TAMMELA, Petter, 753 22 Uppsala (SE); YAMADA, Shoko, 218 45 Vintrie (SE); SANDBERG, Lars, 663 41 Hammarö (SE)
(74) Representative: Kransell & Wennborg KB

(57) **Abstract**

The present disclosure provides a method comprising the steps of:
a) adding nanocellulose to cellulose fibres coated with a redox-active polymer to obtain a mixture; and
b) forming a porous structure, such as a sheet, from an aqueous furnish comprising said mixture.

## Description

### TECHNICAL FIELD

The present disclosure relates to the field of paper-based energy storage devices and in particular to production of them in an industrial scale.

### BACKGROUND

There is an environmental consciousness in society shifting the focus towards bio-based, green products and sustainable processes.

Cellulose is a green material that combines low-cost manufacturing with good mechanical properties and low weight. Moreover, paper-products have well-established production methods. Therefore, cellulose-fibres and fibrils have attracted interest to be used in composite materials, especially as reinforcing elements.

Furthermore, the demand for energy storage is increasing and there is a constant strive to develop alternatives to existing technologies.

Cellulose-based materials, such as papers, are interesting to use in energy-storage applications due to their green character and mechanical properties. However, cellulose fibres are inherently non-conductive and are therefore used as isolators in for example mass-impregnated cables, rather than in the actual energy storage.

To overcome this issue, there have been suggestions on strategies to chemically modify the surface of cellulose fibres and fibrils with redox-active polymers, such as polypyrrole or poly(3,4-ethylenedioxythiophene) (PEDOT). From such fibres and fibrils, electrically conductive films and lab sheets have been produced.

However, since the modification process has been conducted in lab scale, the industrial feasibility is limited.

Moreover, when chemically modifying the surface of cellulose fibres by covering it with polymers, the otherwise present secondary interactions between fibres will be disturbed. Such interactions are contributing to the mechanical integrity of both wet paper during paper production as well as to finished dry paper. When producing a paper in a lab scale, a decrease of secondary interactions is not a major problem since there is no formation of a moving paper web that is transported long distances. However, in an industrial scale it is necessary to produce such moving web.

Finally, the assembly of energy storage devices comprising conductive paper has been conducted in lab scale.

### SUMMARY

A problem addressed by the present disclosure is to provide a method of chemically modifying fibres to produce redox-active fibres that can be used in an industrial scale.

Another problem addressed by the present disclosure is to provide a method of forming a porous substrate, such as a porous sheet ("paper"), of chemically modified conductive fibres that can be used in an industrial scale without major runnability issues, e.g. without too frequent breakage of the substrate during production.

Yet another problem addressed by the present disclosure is the provision of an energy storage device that can be produced in an industrial scale.

Accordingly, the following itemized listing of embodiments is provided.
1. A method comprising the steps of:
   a) adding nanocellulose to cellulose fibres coated with a redox-active polymer to obtain a mixture; and
   b) forming a porous structure from an aqueous furnish comprising said mixture.
2. The method of item 1, wherein the porous structure is a sheet.
3. The method of item 2, wherein step b) comprises forming the sheet in a paper machine.
4. The method of item 1, further comprising the steps of:
   i) providing an aqueous suspension of the cellulose fibres coated with a redox-active polymer having a pH of below 4.0; and
   ii) adjusting the pH of the aqueous suspension to above 4.0, such as 4.1-7-0, preferably above 4.3, such as 4.3-7.0,
   wherein step a) is carried out on the aqueous suspension obtained in step ii).
5. The method of item 4, wherein the pH is adjusted by adding ammonia or a buffer.
6. The method of any one of the preceding items, further comprising the steps of:
   1) providing a suspension of cellulose fibres having a Schopper-Riegler (SR) number determined according to ISO 5267-1:1999 of 30-55, such as 32-50, such as 35-42, preferably 36-42;
   2) polymerizing monomers on said pretreated cellulose fibres so as to obtain a crude product; and
   3) washing the crude product so as to the obtain cellulose fibres coated with a redox-active polymer.
7. The method of any one of the preceding items, wherein the redox-active polymer is a conducting polymer, such as polypyrrole.
8. The method of items 6 and 7, wherein the monomers are pyrrole (Py) monomers and the redox-active polymer is polypyrrole (PPy).
9. The method of any one of items 1-6, wherein the redox-active polymer is poly(3,4-ethylenedioxythiophene) (PEDOT), polythiophene (PT), polyaniline (PANI), polyacetylenes (PAcs), polyphenylene (PPh), polyphenylene sulfide (PPhS) or polyphenylene vinylene (PPhV).
10. The method of items 6 and 9, wherein the monomers are 3,4-ethylenedioxythiophene (EDOT) monomers and the redox-active polymer is poly(3,4-ethylenedioxythiophene) (PEDOT).
11. The method of items 6 and 9, wherein the monomers are thiophene (T) and the redox-active polymer is polythiophene (PT).
12. The method of items 6 and 9, wherein the monomers are aniline (ANI) and the redox-active polymer is polyaniline (PANI).
13. The method of items 6 and 9, wherein the monomers are acetylene (Ac) derivatives and the redox-active polymer is polyacetylene (PAc).
14. The method of items 6 and 9, wherein the monomers are phenylene (Ph) and the redox-active polymer is polyphenylene (PPh).
15. The method of items 6 and 9, wherein the monomers are phenylene sulfide (PhS) and the redox-active polymer is polyphenylene sulfide (PPhS).
16. The method of items 6 and 9, wherein the monomers are phenylene vinylene (PhV) and the redox-active polymer is polyphenylene vinylene (PPhV).
17. The method of any one of the preceding items, wherein the proportion of redox-active polymer in the cellulose fibres coated with a redox-active polymer is at least 40% by weight, such as 40%-70% by weight, such as 40%-60% by weight.
18. The method of any one of the preceding items, wherein the proportion of redox-active polymer in the cellulose fibres coated with a redox-active polymer is at least 50% by weight, such as 50%-70% by weight, such as 50%-60% by weight.
19. The method of item 6, wherein the cellulose fibres are subjected to a mechanical pretreatment prior to step 1).
20. The method of item 19, wherein the mechanical treatment is refining, preferably low consistency (LC) refining.
21. The method of any one of the preceding items, wherein the cellulose fibres are never-dried cellulose fibres.
22. The method of any one of the preceding items, wherein the cellulose fibres are wood cellulose fibres.
23. The method of any one of the preceding items, wherein the cellulose fibres are hardwood fibres or softwood fibres, preferably softwood fibres.
24. The method of any one of the preceding items, wherein the cellulose fibres are bleached fibres or unbleached fibres, preferably bleached fibres.
25. The method according to item 24, wherein the brightness (ISO 2470-1:2016) of the bleached fibres is at least 78 %, such at least 80 %, such as at least 83 %.
26. The method of any one of the preceding items, wherein the cellulose fibres are kraft fibres.
27. The method of any one of the preceding items, wherein the charge capacity of the cellulose fibres coated with a redox-active polymer is at least 130 C/g, such as at least 150 C/g and wherein the charge capacity is the amount of oxidation charge measured in 2 M NaCl (aq.) with cyclic voltammetry between -0.9 V and 0.3 V vs Ag/AgCl with a scan rate of 5 mV/s divided by the total weight of the coated fibres.
28. The method of any one of the preceding items, wherein the charge capacity of the cellulose fibres coated with a redox-active polymer is 30-150 C/cm³, such as 70-120 C/cm³, and wherein the charge capacity is the amount of oxidation charge for example measured in 2 M NaCl (aq.) with cyclic voltammetry between -0.9 V and 0.3 V vs Ag/AgCl with a scan rate of 5 mV/s divided by the volume of the coated fibre sample.
29. The method of any one of the preceding items, wherein the specific surface area of the cellulose fibres coated with a redox-active polymer is in the range of 4.0-10.0 m²/g, such as 5.0-9.0 m²/g, when measured according to standard BET analysis of nitrogen sorption isotherms.
30. The method of item 6, wherein the dry weight ratio of pretreated cellulose fibres to monomers in step 2) is in the range of 0.8:1.0 to 1.8:1.0, such as in the range of 1.0:1.0 to 1.5:1.0.
31. The method of item 6, wherein the charge density of the cellulose fibres of step 1) is 100-1500 µeq/g, such as 100-1000 µeq/g, when measured according to SCAN-CM 65:02.
32. The method of item 6, wherein step 2) is carried out in water, optionally in the presence of a detergent.
33. The method of item 6 or 32, wherein step 3) comprises screw press dewatering to obtain a retentate and a filtrate.
34. The method of item 33, further comprising passing the filtrate through a screen, such as a vibrating screen, to separate coated fibres that are then combined with the retentate.
35. The method of item 33 or 34, wherein the retentate is diluted to a consistency of 1.5-3.5 %, preferably 2.0-3.0 %, prior to step a).
36. The method of any one of the preceding items, wherein the consistency of the aqueous furnish in step b) is 0.20-0.60 %, such as 0.30-0.50 %, preferably 0.35-0.45 %.
37. The method of any one of the preceding items, wherein the average aspect ratio of the nanocellulose is at least 100, preferably at least 500, more preferably at least 1000.
38. The method of any one of the preceding items, wherein the average width of the nanocellulose is below 500 nm, preferably 80-300 nm.
39. The method of any one of the preceding items, wherein the average length of the nanocellulose is at least 30 µm, preferably at least 100 µm, more preferably at least 200 µm.
40. The method of any one of the preceding items, wherein the dry weight ratio of nanocellulose to coated fibres in said mixture is in the range of 1.5:100 to 10:100, preferably between 2:100 and 8:100.
41. The method of any of the preceding items, wherein the moisture content of the porous sheet is 1-10 wt.%, such as 1-7 wt.%, such as 1-5 wt.%.
42. The method of any of the preceding items, wherein the porous sheet has a grammage according to ISO 536:2012 of 80-150 g/m², such as 90-130 g/m².
43. The method of any of the preceding items, wherein the porous sheet has a density according to ISO 534:2011 of 0.20 - 1.20 g/cm³, such as 0.25-1.20 g/cm³, such as 0.25-0.95 g/cm³, such as 0.25-0.75 g/cm³, such as 0.25-0.65 g/cm³.
44. The method of any of the preceding items, wherein the porous sheet has a thickness according to ISO 534:2011 of 100-450 µm, such as 150-350 µm.
45. A method for producing an energy storage device, wherein the method comprises the steps:
   - cutting a porous sheet of cellulose fibres coated with a redox-active polymer, such as a porous sheet produced according to any one of items 1-44, into individual sheets;
   - preparing a paper cathode by forming a laminate of at least one of said individual sheets and a conductive film, such as an aluminium film, e.g. a laminate in which the conductive film is sandwiched between two of said individual sheets;
   - arranging said paper cathode in parallel to a separator;
   - arranging an anode next to the separator in a stacked arrangement so that the separator is arranged between the paper cathode and the anode;
   - placing the stacked arrangement in a housing;
   - filling the housing with electrolyte; and
   - sealing the housing.
46. The method according to item 45, wherein the housing is a cylindrical case.
47. The method according to item 45 or 46, wherein the filling with electrolyte is performed under vacuum.
48. The method according to any one of items 45-47, wherein the porous sheet is calendered.
49. The method according to item 48, wherein the porous sheet is calendered prior to cutting the porous sheet.
50. An energy storage device comprising a paper cathode, an anode, a separator arranged between the paper cathode and anode in a stacked arrangement, and an electrolyte, wherein the paper cathode is a porous sheet of cellulose fibres coated with a redox-active polymer, such as a porous sheet produced according to any one of items 1-44.
51. The energy storage device according to item 50, wherein the anode comprises carbon, such as graphite or mesocarbon microbreads coated on a conductive foil, such as copper foil.
52. The energy storage device according to item 50 or 51, wherein the separator is a plastic, such as polyolefin plastic, such as polypropylene plastic.
53. The energy storage device according to any one of items 50-52, wherein the electrolyte is water-based, such as salt water-based.
54. The energy storage device according to any one of items 50-53, wherein the electrolyte comprises a lithium salt.
55. The energy storage device according to item 54, wherein the electrolyte comprises LiPF₆.
56. The energy storage device according to any one of items 53-55, wherein the energy storage device is a supercapacitor.
57. The energy storage device according to any one of items 54-55, wherein the energy storage device is a battery.
58. The energy storage device according to item 57, wherein the specific energy is 10-30 Wh/kg, such as 15-25 Wh/kg.
59. The energy storage device according to item 56, wherein the power density is 3-15 kW/kg, such as 4-8 kW/kg.
60. The energy storage device according to any of items 57-58, wherein the power density is 50-200 W/kg, such as 100-150 W/kg.
61. A method of producing a cathode, wherein the method comprises the steps:
   - providing a suspension comprising cellulose fibres coated with a redox-active polymer, such as a suspension from where a sheet is produced according to any one of items 1-44;
   - arranging the suspension in a first headbox;
   - providing a separator arranged on a reeler;
   - applying the suspension from the first headbox to a moving belt forming a web;
   - applying the separator onto the web.
62. The method according to item 61, wherein the web is dewatered to a moisture content of 1-10 wt.%, such as 1-7 wt.%, such as 1-5 wt.%, before or after the application of the separator thereby forming a dual-layered sheet.
63. The method according to item 62, wherein the method further comprises the steps:
   - arranging a first dual-layered sheet next to one anode layer so that the anode layer is arranged next to the separator layer of the dual-layered sheet;
   - further arranging one conductive film layer, such as an aluminium film, next to the layer comprising cellulose fibres coated with redox-active polymer in a stacked arrangement;
   - further arranging a second dual-layered sheet next to the conductive film layer thereby forming a paper cathode with the separator sandwiched between the paper cathode and the anode in a stacked arrangement;
   - placing the stacked arrangement in a housing;
   - filling the housing with electrolyte; and
   - sealing the housing.
64. The method according to any one of items 61-63, wherein the suspension comprises at least 70 % cellulose fibres coated with a redox-active polymer, such as at least 90 % cellulose fibres coated with a redox-active polymer, such as at least 95 % cellulose fibres coated with a redox-active polymer based on the total dry weight of the suspension.

### DETAILED DESCRIPTION

As a first aspect of the present disclosure, there is provided a method comprising the steps of:
a) adding nanocellulose to cellulose fibres coated with a redox-active polymer to obtain a mixture; and
b) forming a porous structure from an aqueous furnish comprising said mixture.

In a preferred embodiment, the porous structure is a sheet. The sheet is preferably formed in a paper machine, in which the aqueous furnish is caused to flow onto a forming wire. On the forming wire, a web is formed. The web is typically dewatered in a press section and dried in a drying section. The forming section, the press section and the drying section are known to the person of skill in the art of paper making.

In an embodiment of the first aspect, the method further comprises the steps of:
i) providing an aqueous suspension of the cellulose fibres coated with a redox-active polymer having a pH of below 4.0; and
ii) adjusting the pH of the aqueous suspension to above 4.0, such as 4.1-7-0, preferably above 4.3, such as 4.3-7.0.

Steps i) and ii) precede step a). Accordingly, step a) is typically carried out on the aqueous suspension obtained in step ii).

In step ii), the pH is preferably adjusted using a base that is not releasing any hydroxide ions. In an embodiment of step ii), ammonia or a buffer is added. Adjustment of pH with a strong base, such as NaOH, typically cause deterioration of the cellulose fibres coated with redox-active polymer and impair their electrical performance. On the other hand, a buffer or ammonia, is beneficial as such pH adjustment is less harmful to the electrical performance of the cellulose fibres coated with redox-active polymer. An adjustment of pH is advantageous as a pH of below 4.0 may harm the paper machine.

In an embodiment of the first aspect, the method further comprises the steps of:
1) providing a suspension of cellulose fibres having a Schopper-Riegler (SR) number determined according to ISO 5267-1:1999 of 30-55, such as 32-50, such as 35-42, preferably 36-42;
2) polymerizing monomers on said pretreated cellulose fibres so as to obtain a crude product; and
3) washing the crude product so as to the obtain cellulose fibres coated with a redox-active polymer. Typically, the washing is conducted in water until oxidant residuals or reactions products thereof are present in an amount of below 14 g/kg of coated cellulose fibres.

Consequently, steps 1)-3) are carried out before step a) and also before steps i)-ii), if included.

Steps 1)-3) may be carried out at another site than steps i)-ii) and a)-b). Accordingly, steps 1)-3) may result in an aqueous suspension of the cellulose fibres coated with a redox-active polymer having a pH of below 4.0. This suspension is then transferred to another site, e.g. a paper mill, in which steps i)-ii) and a)-b) are carried out. Alternatively, all steps described above may be carried out at the same site.

The SR number of step 1) provides for high charge density in combination with high sheet strength.

To obtain the SR number, the cellulose fibers have typically been subjected to mechanical pretreatment, such as refining, preferably low consistency (LC) refining. LC refining is known to the person of skill in the art of papermaking and is typically carried out at a consistency of 2-6 %.

The dry weight ratio of pretreated cellulose fibres to monomers in step 2) may be in the range of 0.8:1.0 to 1.8:1.0, such as in the range of 1.0:1.0 to 1.5:1.0.

The charge density of the cellulose fibres of step 1) may be 100-1500 µeq/g, such as 100-1000 µeq/g, when measured according to SCAN-CM 65:02.

Step 2) is normally carried out in water. A detergent, such as a Tween detergent, e.g. Tween 80, may be present in the water suspension when the polymerization is carried out.

Step 3) may comprise dewatering by means of a screw press to obtain a retentate and a filtrate. Step 3) may further comprise passing the filtrate through a screen, such as a vibrating screen, to separate coated fibres. The separated coated fibres are preferably combined with the retentate.

The retentate is diluted to a consistency of 1.5-3.5 %, preferably 2.0-3.0 %, prior to step a).

The redox-active polymer may be conducting polymer, preferably polypyrrole (PPy). In such case, the above-mentioned monomers are pyrrole (Py) monomers if step 2) is included in the method.

The redox-active polymer may also be poly(3,4-ethylenedioxythiophene) (PEDOT), polythiophene (PT), polyaniline (PANI), polyacetylenes (PAcs), polyphenylene (PPh), polyphenylene sulfide (PPhS) or polyphenylene vinylene (PPhV).

The proportion of redox-active polymer in the cellulose fibres coated with a redox-active polymer may be at least 40% by weight, such as 40%-70% by weight, such as 40%-60% by weight. Preferably, the proportion of redox-active polymer in the cellulose fibres coated with a redox-active polymer is at least 50% by weight, such as 50%-70% by weight, such as 50%-60% by weight.

The cellulose fibres of the present disclosure are preferably never-dried cellulose fibres. It has been shown that never-dried pulp provides for higher electroactivity than resuspended dried pulp.

The fibres are typically wood fibres, such as hardwood fibres or softwood fibres. Softwood fibres are preferred. Cellulose fibres can also be obtained from non-wood sources such as straw (e.g. wheat straw, rice straw, corn straw or sorghum straw), bagasse, hemp, bamboo, reed, grass (e.g. mischanthus), jute, flax and sisal.

The cellulose fibres are preferably bleached, but unbleached fibres are not excluded. The brightness (ISO 2470-1:2016) of the bleached fibres is typically at least 78 %, preferably at least 80 %, such as at least 83 %, such as at least 85 %.

The pulping method used to prepare the cellulose fibres may be kraft or sulphite pulping. Accordingly, the fibres may be kraft fibres or sulphite fibres, such as dissolving fibres.

The charge capacity (by weight) of the cellulose fibres coated with a redox-active polymer is preferably at least 130 C/g, such as at least 150 C/g. The charge capacity is the amount of oxidation charge measured in 2 M NaCl (aq.) with cyclic voltammetry between -0.9 V and 0.3 V vs Ag/AgCl with a scan rate of 5 mV/s divided by the total weight of the coated fibres.

The charge capacity (by volume) of the cellulose fibres coated with a redox-active polymer is preferably 30-150 C/cm3, such as 70-120 C/cm3. Here, the charge capacity is the amount of oxidation charge for example measured in 2 M NaCl (aq.) with cyclic voltammetry between -0.9 V and 0.3 V vs Ag/AgCl with a scan rate of 5 mV/s divided by the volume of the coated fibre sample.

The specific surface area of the cellulose fibres coated with a redox-active polymer may be in the range of 4.0-10.0 m²/g, such as 5.0-9.0 m²/g, when measured according to a protocol based on the BET method (Brunauer, Stephen, Paul Hugh Emmett, and Edward Teller. "Adsorption of gases in multimolecular layers." Journal of the American chemical society 60.2 (1938): 309-319.). Nitrogen (N2) gas adsorption isotherms were recorded using an ASAP 2020 (Micromeritics, USA) instrument. Measurements were performed at liquid nitrogen temperatures (i.e., 77 K), and the specific surface areas of the samples were obtained from the isotherms using the BET method.

The average thickness of the polymer coating on the coated fibres may for example be in the range of 25-100 nm.

The consistency of the aqueous furnish in step b) is preferably 0.20-0.60 %, such as 0.30-0.50 %, preferably 0.35-0.45 %. In case of a paper machine, this is the head box consistency.

There are different synonyms for nanocellulose which are, sometimes confusingly, used in the literature, such as cellulose microfibrils (MFC), fibrillated cellulose, nanofibrillated cellulose (NFC), fibril aggregates, nanoscale cellulose fibrils, cellulose nanofibres, cellulose nanofibrils (CNF), cellulose microfibres (CMF), cellulose fibrils, cellulose filaments (CFs), microfibrillar cellulose, microfibril aggregrates and cellulose microfibril aggregates. MFC may also be characterized by various physical or physical-chemical properties such as large surface area or its ability to form a gel-like material at low solids content (1-5 wt.%) when dispersed in water. The cellulose fibre is preferably fibrillated to such an extent that the final specific surface area of the formed MFC is from about 1 to about 200 m²/g, or more preferably 50-200 m²/g when determined for a freeze-dried material with the BET method (Brunauer, Stephen, Paul Hugh Emmett, and Edward Teller. "Adsorption of gases in multimolecular layers." Journal of the American chemical society 60.2 (1938): 309-319.). Nitrogen (N2) gas adsorption isotherms are recorded using an ASAP 2020 (Micromeritics, USA) instrument. Measurements are performed at liquid nitrogen temperatures (i.e., 77 K), and the specific surface areas of the samples were obtained from the isotherms using the BET method.

Various methods exist to make MFC, such as single or multiple pass refining, pre-hydrolysis followed by refining or high shear disintegration or liberation of fibrils. One or several pre-treatment step(s) may be conducted in order to make MFC manufacturing energy efficient including enzymatic or chemical pre-treatment.

The nanofibrillar cellulose may contain some hemicelluloses; the amount may be dependent on factors such as plant source and pulping process. Mechanical fibres may be carried out with suitable equipment such as a refiner, grinder, homogenizer, collider, friction grinder, ultrasound sonicator, fluidizer such as microfluidizer, macrofluidizer or fluidizer-type homogenizer. Depending on the MFC manufacturing method, the product might also contain fines or e.g. other chemicals present in wood fibres or in papermaking process. The product might also contain various amounts of micron size fibre particles that have not been efficiently fibrillated. MFC may be produced from wood cellulose fibres, both from hardwood or softwood fibres. It may alternatively be made from agricultural fibres such as wheat straw pulp, bamboo, bagasse, or other non-wood fibre sources. It is preferably made from pulp of virgin fibre, e.g. mechanical, chemical and/or thermomechanical pulps, preferably never-dried fibres.

The above described definition of MFC includes, but is not limited to, the proposed TAPPI standard W13021 on cellulose nanofibril (CNF) defining a cellulose nanofibre material containing multiple elementary fibrils with both crystalline and amorphous regions, having a high aspect ratio with width of 5-30 nm and aspect ratio usually greater than 50.

The average aspect ratio of the nanocellulose may be at least 100, preferably at least 500, more preferably at least 1000. It is beneficial to use a nanocellulose having such aspect ratio due to its improving effect on immediate wet strength.

The average width of the nanocellulose is typically below 500 nm, preferably 80-300 nm.

The average length of the nanocellulose is typically at least 30 µm, preferably at least 100 µm, more preferably at least 200 µm.

In a preferred embodiment of the first aspect, the dry weight ratio of nanocellulose to coated fibres in said mixture is in the range of 1.5:100 to 10:100, more preferably between 2:100 and 8:100. It is advantageous to use a paper machine with short free strokes as the dry ratio of nanocellulose can be kept low. The design of the pick up rolls is preferably also made to promote short free strokes so that the rolls are nearly overlapping one another using a similar speed.

A suitable type of nanocellulose is FiloCell (Kruger Biomaterials). Patent applications related to the preparation of FiloCell has been filed by FPInnovations.

The moisture content of the porous sheet is typically 1-10 wt.%, such as 1-7 wt.%, such as 1-5 wt.%. A too low moisture content may cause deterioration of the electrical properties. In case of production in a paper machine, this is the moisture content of the porous sheet during winding on the jumbo reel.

The porous sheet may have a grammage according to ISO 536:2012 of 80-150 g/m², such as 90-130 g/m².

The porous sheet may have a density according to ISO 534:2011 of 0.2-1.2 g/cm³, such as 0.25-1.2 g/cm³. Typically, the density is not above 0.95 g/cm³ and often not above 0.75 g/cm³.

The porous sheet may have a thickness according to ISO 534:2011 of 100-300 µm, such as 150-250 µm.

As a second aspect of the present disclosure, there is provided a method for producing an energy storage device, wherein the method comprises the steps:
- cutting porous sheets of cellulose fibres coated with a redox-active polymer into individual sheets;
- preparing a paper cathode by forming a laminate of at least one of said individual sheets and a conductive film, such as an aluminium film, e.g. a laminate in which the conductive film is sandwiched between two of said individual sheets;
- arranging said paper cathode in parallel to a separator;
- arranging an anode next to the separator in a stacked arrangement so that the separator is arranged between the paper cathode and the anode;
- placing the stacked arrangement in a housing;
- filling the housing with electrolyte; and
- sealing the housing.

The porous sheet of the second aspect is preferably produced according to the first aspect.

In an embodiment of the second aspect, the filling with electrolyte is performed under vacuum.

The method according to the second aspect may further comprise calendering of the porous sheet. Calendering is preferably conducted prior to cutting the porous sheet. It is beneficial to calender the sheet when it is dry as water typically screens charges in the polymeric layers that may become more compact and collapse. Moreover, it is advantageous to calender the sheet since a higher density is obtained that provides for more material per volume. In addition, calendering reduces porosity and thereby potential use of excess electrolyte that is needed to fill the otherwise too porous material. Calendering may be performed in connection a paper machine, known as on-line/in-line calendering, and alternatively, it may be performed separate from the paper machine, possibly in another location, known as off-line calendering.

As a third embodiment of the present disclosure, there is provided an energy storage device comprising a paper cathode, an anode, a separator arranged between the paper cathode and anode in a stacked arrangement, and an electrolyte, wherein the paper cathode is a porous sheet of cellulose fibres coated with a redox-active polymer.

The porous sheet of the third aspect is preferably produced according to the first aspect.

The anode may comprise carbon, such as graphite or mesocarbon microbreads coated on a conductive foil, such as copper foil.

The separator may be a plastic, such as polyolefin plastic, such as polypropylene plastic.

The electrolyte is normally water-based, such as salt water-based.

The electrolyte may comprise a lithium salt, e.g. in the form of LiPF₆.

Accordingly, the energy storage device may be a battery. In such a case, the specific energy of the energy storage device may be 10-30 Wh/kg, such as 15-25 Wh/kg.

The energy storage device may also be a supercapacitor, typically a symmetrical supercapacitor. In such a case, the power density is higher than for a combination of paper cathode and graphite anode, and is typically 3-15 kW/kg, such as 4-8 kW/kg.

As a fourth aspect there is provided yet another method of producing an energy storage device, wherein the method comprises the steps:
- providing a suspension of cellulose fibres coated with a redox-active polymer;
- arranging the suspension in a first headbox;
- providing a separator arranged on a reeler;
- applying the suspension from the first headbox to a moving belt forming a web;
- applying the separator onto the web.

Typically, the web is dewatered to a moisture content of 1-10 wt.%, such as 1-7 wt.%, such as 1-5 wt.%, before or after the application of the separator thereby forming a dual-layered sheet.

In such a case the method according to the fourth aspect typically further comprises the steps:
- arranging a first dual-layered sheet next to one anode layer so that the anode layer is arranged next to the separator layer of the dual-layered sheet;
- further arranging one conductive film layer, such as an aluminium film, next to the layer comprising cellulose fibres coated with redox-active polymer in a stacked arrangement;
- further arranging a second dual-layered sheet next to the conductive film layer thereby forming a paper cathode with the separator sandwiched between the paper cathode and the anode in a stacked arrangement;
- placing the stacked arrangement in a housing;
- filling the housing with electrolyte; and
- sealing the housing.

Preferably, the suspension in the fourth aspect comprises at least 70 % cellulose fibres coated with a redox-active polymer, such as at least 90 % cellulose fibres coated with a redox-active polymer, such as at least 95 % cellulose fibres coated with a redox-active polymer based on the total dry weight of the suspension.

The embodiments and benefits of the second aspect apply to the fourth aspect *mutatis mutandis.*

### EXAMPLES

### Example 1 - Production of fibres coated with a redox-active polymer

A pulp suspension (5 wt.%) of never-dried bleached kraft pulp from pine was refined to a Schopper-Riegler (SR) number of 37. The pulp (125 kg dry content) was loaded into a 20 m³ reaction tank equipped with propellers and diluted with 23 000 L water and 333 L concentrated HCl (aq.) (28%). 150 kg of pyrrole, 10 kg of Tween-80 and 2085 kg of 40% FeCl₃ (aq.) were added, and every hour fibre samples were taken out, dried and the capacity of the fibres was measured. The reaction was allowed to proceed until a capacity of the fibres of 140 C/g had been obtained (approx. 12 h).

The fibres were thereafter washed by pumping the suspension to a screw press connected to a vibrating screen. In the screw press, the suspension was dewatered, and thereafter re-diluted to 2-3 wt.% and mixed with the residual fibres in the vibrating screen. The re-diluted was thereafter circulated back into the reaction tank, and the washing procedure conducted in cycles until clean fibres coated with redox-active polymer were obtained. Note that the main reason for washing in cycles was that the screw press was smaller in volume than the reaction tank.

### Example 2 - Pilot paper machine

A pilot paper machine, called FEX (available in RISE Bioeconomy in Stockholm, Sweden) was used. The pilot paper machine comprises a headbox, a forming section, a press section and an offline drying section.

40 kg fibres coated with a redox-active polymer produced according to Example 1 having a dry content of 10% and pH of 3.8 was diluted to approx. 1 % and stirred in the chest of the paper machine. Cellulose filaments (FiloCell from Kruger Inc.) having a dry content of 32 % were added to the chest in an amount of 1.8% compared to total fibre weight. pH of the suspension was adjusted by adding 50 L of 0.1 M phosphate buffer. The total volume of the suspension was approx. 3000 L. The pH in the chest after the pH adjustment was 3.4 and the final concentration approx. 1.3%.

The suspension was further diluted to 0.65% at the head box with a resulting pH of 4.3. The following parameters were used for the FEX trial:
- Wire speed: 100 m/min
- Jet speed of 110 m/min
- Stock flow rate: 935 L/min
- Line load of the press section: 20 kN/m at the roll press, 200 kN/m at 1.25° at the first shoe press, and 400 kN/m at 1.35° at the second shoe press.

The paper went through all the way to the winding roll without breaking, but some breakages were experienced at the winding roll. Nevertheless, the sheet was wound.

After winding, the sheet was dried on an offline single cylinder dryer at 80 °C. The dryness after drying at 80 °C was 92% and the grammage was 100 g/m².

To counteract web breaks, a mechanically stronger unrefined bleached softwood kraft pulp was introduced in the headbox before and after the fibres coated with a redox active polymer were used to create a pulling effect, wherein the softwood kraft pulp pulls the sheet section of modified fibres through.

### Example 3 - Full-scale paper machine

A full-scale paper machine "Beetham PM1" papermachine in UK having a wire width of 2.6 m and running at a machine speed of 108 m/min was used.

1550 kg (dry weight) fibres coated with a redox-active polymer produced according to example 1 having a consistency of 2 % and pH of 2.0 was kept in a 70 m³ tank.

pH of the suspension was adjusted by slow addition of 600 L10% ammonia (58 kg as pure ammonia) to the suspension. Cellulose filaments (FiloCell from Kruger Inc.) of approx. 30% consistency was added as a strength additive in-between trials of material formation on paper machine, with a gradual increasing amounts of 1 wt.%, 2 wt.%, 3 wt.% and 6 wt.% with respect to dry weight of the cellulose fibres coated with redox active polymer. The suspension had approx. 2% consistency in the PM1 machine tank of 30 m³ and in the dump tank being approx. 50 m³.

The following machine parameters were applied:
- Consistency: 2.91% after the machine tank and 0.4% when the stocks comes on the forming fabric.
- Head box slice gap: 25.4 mm
- Stock flow rate: 1531 L/min (Flow of the stock that goes on to the forming fabric, generally 0.4% consistency.)
- Stock valve position: 47%
- Wire speed: 108 m/min
- JW1 (Efflux ratio): 1.094 (The speed difference between forming fabric and the stock coming out of headbox. A value 1> means that the wire is faster than the stock.)
- Screen basket: Removed
- After the second press, before the pre dryer, the moisture of the paper is usually ∼40%.
- Pre dryer top cylinder steam pressure: 1.8 bar (∼130 °C)
- Pre dryer bottom cylinder steam pressure: 1.9 bar (∼130 °C)
- Pre dryers ratio: 1.0
- MG cylinder steam pressure: 2.3 bar (140-145 °C)
- MG cylinder's press roll was not used so there was no pressing force on the MG cylinder.
- After drying cylinders were not heated as they are usually used to dry coating.
- Broke: All broke tails etc was returned to the hog pit immediately for recycling.
- Hog pit tank: Lead to dump tank until running out then to the machine tank.
- As soon as the sheet was formed, grammage was checked and result was fed back to the machine man: Trial last approx. 45 minutes and there was no time for broke generation.
- Jumbo reel: All sheet was put on the same jumbo and then sorted at reeler and rewinder.
- The jumbo roll was first reeled and splitted into two at the reeler. Then the roll was rewound and splitted into two rolls and the edges of the rolls were cut to make them even at the Harnden machine.

For the full-scale paper machine, the modified fibres with redox-active polymer were introduced directly on the paper machine instead of using another mechanically stronger material to pull the electrode material as in the pilot machine. The reason was to avoid the production of a gradient sheets containing unmodified fibres at the beginning and end of the sheet sections that does not work as electrode material. Moreover, the broke and all the unsuccessful sheet pieces could also be put in a hog-pit, and then pumped back into the dump tank.

The retention on the wire was 94.6 %, total length of the web was approx. 5000 m, and the grammage produced was 111 g/m².

The mechanical properties were evaluated and in Table 1 below the properties of sheets having different content of cellulose filaments are shown.

**Table 1. Electrode paper with different cellulose filament contents.**

| Cellulose filament [wt.%] | 1 | 2 | 3 | 6 |
|---|---|---|---|---|
| Grammage [g/m²] | (∼110) | 103 | 128 | 111 |
| Tensile strength [N/15 mm] | 0.1 | 7.1 | 12.3 | 18 |
| Tensile index [Nm/g] | (∼6.1×10⁻²) | 4.6 | 6.4 | 11 |
| Burst strength [kPa] | - | 29 | 56 | 83 |
| Burst index [kPa·m/g] | - | 0.28 | 0.44 | 0.75 |

### Example 4 - Battery cell assembly

### Cathode preparation

Two sheets comprising polypyrrol-coated fibres produced according to Example 3 each having a grammage of 95 g/m², width of 55 mm, length of 480 mm and weight of 2.48 g were calendared into a thickness of 170 µm followed by drying in vacuum oven at 110 °C for 3 h. An aluminium foil current collector having a thickness of 20 µm was provided, and tabs were welded to the foil for connection to cell terminals. The tabs were thereafter protected with insulating polyimide tape. The two sheets were arranged with an aluminium foil layer in-between to produce the cathode.

### Anode preparation

Copper foil with a thickness of 10 µm was coated with graphite on both sides using acetylene black and polyvinylidene fluoride as conductive agent and binder, respectively. The loading of active material was 18 g/m², and the width and length of the copper foil was 56 mm and 480 mm, respectively.

### Separator

As separator was used Celgard 2325 or comparable polypropylene separator being 25 µm thick, 58 mm wide and 495 mm long.

Electrolyte was 1 M LiPF₆ dissolved in an ethylene carbonate/dimethyl carbonate (1:1 Vol/Vol).

### Cell assembly

In a stacked arrangement, it was arranged (in the order of stacking) separator, anode, separator and cathode by using a winding needle, winding the separator also around the stack forming an insulating final layer of the roll. The roll was inserted in a cylindrical case and dried in vacuum oven at 80 °C. Subsequently, the electrolyte was injected under mild vacuum (<300 mbar below ambient pressure) and in controlled dew point (<-60 °C) at a temperature of 20 °C. Finally, the cells were sealed by a pneumatic crimping machine.

### Example 5 - Evaluation of the electrode of the battery cell

The electrode of a battery cell produced according to Example 4 has been evaluated with respect to its electrical properties accordingly.

Discs of the sheets comprising polypyrrol-coated fibres produced according to Example 3 were punched out (typically Ø14 mm, 25 mg). The discs were laminated to polymer-laminated aluminum foil (PET 12µm// Al 9µm// PE 100µm, NIP30PE100, Skultuna Flexible Sweden) with the aluminium foil-side being laminated to the sheet comprising polypyrrol-coated fibres, thereby forming an electrode.

To prepare a pouch, a square piece (20 cm x 20 cm) of laminated aluminum foil was folded to a rectangular piece (10 cm x 20 cm). One of the short sides was taped around the edges, to prevent short circuiting, with a strip of thermal bonding foil (Thermal bonding film 588, 3M USA) on both sides to facilitate a strong seam. The thermal bonding foil was also used to tape two current collectors: one copper tab and one aluminum tab (0.5 mm wide and 4 cm long) sticking out of the pouch. The seam with the two current collectors sticking out was sealed prior to transferring the electrode material and the prepared pouch to an argon-filled glovebox.

In the glovebox, the electrode material was dried in an oven at 100 °C over night. Apiece of separator (Ø25 mm, E-8P01E, Solupor DSM Solutech) was sandwiched between the paper electrode and a Lithium foil (Ø20 mm, 125 µm thick, Cyprus Foote Minerals). Additionally, circular pieces of aluminum and copper were placed in a stack in contact with the paper electrode sample and the lithium, respectively. The stack was placed inside the folded pouch so that the aluminum tab contacted the paper electrode sample, and the copper tab contacted the lithium foil.

Subsequently, electrolyte was added by an automatic pipette (LP40 *i.e*. 1.0 M lithium hexafluorophosphate in ethylene carbonate/diethyl carbonate (1/1 v/v), BASF), and the pouch was sealed inside the glove box using a vacuum sealer (C 200, MULTIVAC). After the sealing of the pouch cell, the cell could be transferred outside the glovebox and tested electrochemically. Electrochemical characterizations were performed with an Autolab PGSTAT10 potentiostat.

The capacity of the electrode was roughly 30 mAh/g with a discharge potential between 3.3 V and 2.1 V vs Li⁺/Li. Furthermore, the discharge was accompanied with a slope typical for capacitive behavior of polypyrrole corresponding to a capacitance of roughly 100 F/g.

The capacity was roughly constant during the first 25 cycles.

## Claims

1. A method comprising the steps of:
a) adding nanocellulose to cellulose fibres coated with a redox-active polymer to obtain a mixture; and
b) forming a porous structure, such as a sheet, from an aqueous furnish comprising said mixture.

2. The method of claim 1, wherein the porous structure is a sheet and step b) comprises forming the sheet in a paper machine.

3. The method of claim 1 or 2, further comprising the steps of:
i) providing an aqueous suspension of the cellulose fibres coated with a redox-active polymer having a pH of below 4.0; and
ii) adjusting the pH of the aqueous suspension to above 4.0, such as 4.1-7-0, preferably above 4.3, such as 4.3-7.0,
wherein step a) is carried out on the aqueous suspension obtained in step ii).

4. The method of claim 3, wherein the pH is adjusted by adding ammonia or a buffer.

5. The method of any one of the preceding claims, wherein the redox-active polymer is a conducting polymer, such as polypyrrole.

6. The method of any one of the preceding claims, further comprising the steps of:
1) providing a suspension of cellulose fibres having a Schopper-Riegler (SR) number determined according to ISO 5267-1:1999 of 30-55, such as 32-50, such as 35-42, preferably 36-42;
2) polymerizing monomers on said pretreated cellulose fibres so as to obtain a crude product; and
3) washing the crude product so as to the obtain cellulose fibres coated with a redox-active polymer.

7. The method of claim 6, wherein step 3) comprises screw press dewatering to obtain a retentate and a filtrate.

8. The method of claim 7, further comprising passing the filtrate through a screen, such as a vibrating screen, to separate coated fibres that are then combined with the retentate.

9. The method of any one of the preceding claims, wherein the consistency of the aqueous furnish in step b) is 0.20-0.60 %, such as 0.30-0.50 %, preferably 0.35-0.45 %.

10. The method of any one of the preceding claims, wherein the dry weight ratio of nanocellulose to coated fibres in said mixture is in the range of 1.5:100 to 10:100, preferably between 2:100 and 8:100.

11. A method for producing an energy storage device, wherein the method comprises the steps:
- cutting a porous sheet of cellulose fibres coated with a redox-active polymer, such as a porous sheet produced according to any one of claims 1-10, into individual sheets;
- preparing a paper cathode by forming a laminate of at least one of said individual sheets and a conductive film, such as an aluminium film, e.g. a laminate in which the conductive film is sandwiched between two of said individual sheets;
- arranging said paper cathode in parallel to a separator;
- arranging an anode next to the separator in a stacked arrangement so that the separator is arranged between the paper cathode and the anode;
- placing the stacked arrangement in a housing;
- filling the housing with electrolyte; and
- sealing the housing.

12. An energy storage device comprising a paper cathode, an anode, a separator arranged between the paper cathode and anode in a stacked arrangement, and an electrolyte, wherein the paper cathode is a porous sheet of cellulose fibres coated with a redox-active polymer, such as a porous sheet produced according to any one of claims 1-10.

13. The energy storage device according to claim 12, wherein the anode comprises carbon, such as graphite or mesocarbon microbeads coated on a conductive foil, such as copper foil.

14. The energy storage device according to claim 12 or 13, wherein the specific energy is 10-30 Wh/kg, such as 15-25 Wh/kg.

15. The energy storage device according to any one of claims 12-14, wherein the power density is 50-200 W/kg, such as 100-150 W/kg.
